# FASCICULE DE BREVET EUROPEEN

(11) **EP 1 991 354 B1**
(45) Date de publication et mention de la délivrance du brevet: **25.12.2019**
(21) Numéro de dépôt: 07704559.9
(22) Date de dépôt: 13.02.2007
(51) Int. Cl.: B01J 35/10, C01G 25/02, B01J 37/03, B01J 37/06, B01J 23/63, B01J 21/06, B01J 23/10, B01D 53/94, B01J 35/00, B01J 37/00, C01G 25/00, C01F 17/00

(54) **COMPOSITION A BASE D'OXYDES DE ZIRCONIUM, DE CERIUM, D'YTTRIUM, DE LANTHANE ET D'UNE AUTRE TERRE RARE, PROCEDE DE PREPARATION ET UTILISATION EN CATALYSE**
ZUSAMMENSETZUNG AUF BASIS VON OXIDEN VON ZIRCONIUM, CER, YTTRIUM, LANTHAN UND EINEM ANDEREN SELTENERDMETALL, ZUGEHÖRIGES HERSTELLUNGSVERFAHREN UND KATALYTISCHE VERWENDUNG
COMPOSITION BASED ON OXIDES OF ZIRCONIUM, CERIUM, YTTRIUM, LANTHANUM AND OF ANOTHER RARE EARTH, METHOD FOR PREPARING SAME AND CATALYTIC USE

(30) Priorité: 17.02.2006 FR 0601407; 16.11.2006 FR 0610032
(43) Date de publication de la demande: 19.11.2008
(73) Titulaire: Rhodia Recherches et Technologies, 93306 Aubervilliers (FR)
(72) Inventeur: LARCHER, Olivier, F-17180 Perigny (FR); VERDIER, Stephan, F-92500 Rueil-Malmaison (FR); ROHART, Emmanuel, F-17220 Sainte Soulle (FR); HUANG, Aimin, Shanghai 60330 (CN)
(74) Mandataire: Senninger, Thierry
(86) Numéro de dépôt international: PCT/EP2007/051387
(87) Numéro de publication internationale: WO 2007/093593

(56) Documents cités:
- EP-A1- 0 842 900
- WO-A-97/02213
- WO-A-2004/085039
- FR-A- 2 793 161
- US-B1- 6 387 338
- VIDMAR P ET AL: "Effects of Trivalent Dopants on the Redox Properties of Ce0.6Zr0.4O2Mixed Oxide" JOURNAL OF CATALYSIS, ACADEMIC PRESS, DULUTH, MN, US, vol. 171, no. 1, 1 octobre 1997 (1997-10-01), pages 160-168, XP004468793 ISSN: 0021-9517

## Description

La présente invention concerne une composition à base d'oxydes de zirconium, de cérium, d'yttrium, de lanthane et d'une autre terre rare, son procédé de préparation et son utilisation en catalyse, notamment pour le traitement des gaz d'échappement d'automobile.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs. Pour être efficaces, ces oxydes doivent présenter une surface spécifique importante même à température élevée.

Il existe un besoin en catalyseurs susceptibles de pouvoir être utilisés à des températures de plus en plus élevées et, pour cela, présentant une grande stabilité de leur surface spécifique.

Un premier objet de l'invention est donc la mise au point d'une composition pouvant répondre à ce besoin.

Par ailleurs, une autre qualité requise pour ces oxydes ou matériaux est leur réductibilité. On entend par réductibilité, ici et pour le reste de la description, le taux de cérium IV dans ces matériaux susceptible de se transformer en cérium III sous l'effet d'une atmosphère réductrice et à une température donnée. Cette réductibilité peut se mesurer par exemple par une consommation d'hydrogène dans un domaine de température donné. Elle est due au cérium qui a la propriété de se réduire ou de s'oxyder. Cette réductibilité doit, bien sûr, être la plus élevée possible.

Il est donc intéressant d'obtenir des produits présentant à la fois une réductibilité élevée et une surface spécifique stabilisée, c'est-à-dire présentant une valeur de surface suffisante à haute température.

Un second objet de l'invention est la mise au point d'une composition pouvant offrir une combinaison intéressante de ces propriétés.

Dans ce but, la composition de l'invention est telle que définie à la revendication 1.

Comme cela a été mentionné plus haut, les compositions de l'invention présentent des valeurs de surface spécifique importantes même après calcination à une température élevée de 1150°C.

D'autres caractéristiques, détails et avantages de l'invention apparaîtront encore plus complètement à la lecture de la description qui va suivre, ainsi que des dessins annexés dans lesquels :

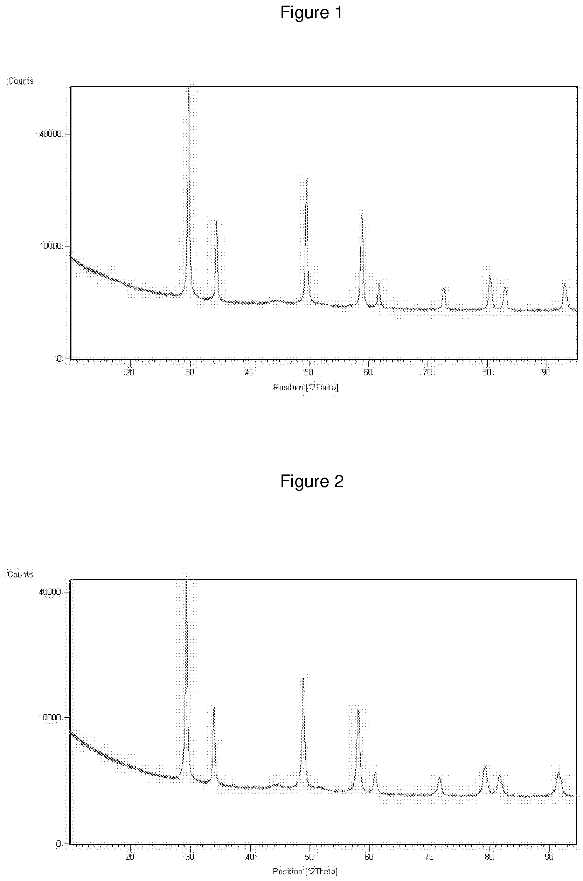

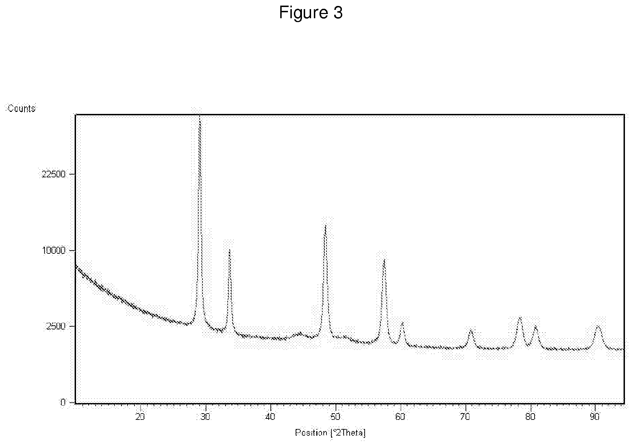

- les figures 1 à 3 sont des diagrammes RX de produits selon l'invention.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

En outre, les calcinations à l'issue desquelles sont données les valeurs de surface sont des calcinations sous air.

Par terre rare on entend les éléments du groupe constitué par l'yttrium et les éléments de la classification périodique de numéro atomique compris inclusivement entre 57 et 71.

Les teneurs sont données en oxydes sauf indication contraire. L'oxyde de cérium est sous forme d'oxyde cérique, les oxydes des autres terres rares sous forme Ln₂O₃, Ln désignant la terre rare, à l'exception du praséodyme exprimé sous la forme Pr₆O₁₁.

On précise pour la suite de la description que, sauf indication contraire, dans les fourchettes de valeurs qui sont données, les valeurs aux bornes sont incluses.

Les compositions selon l'invention se caractérisent par la nature de leurs constituants. Comme indiqué plus haut, elles sont constituées de zirconium et de cérium ainsi que d'au moins trois autres terres rares qui sont l'yttrium, le lanthane et une terre rare supplémentaire autre que le cérium, l'yttrium et le lanthane, ces éléments étant présents sous forme oxyde et dans les proportions massiques qui ont été données plus haut.

L'invention couvre bien entendu le cas où les compositions comprennent plusieurs terres rares supplémentaires, c'est-à-dire autres que le cérium, l'yttrium et le lanthane, en combinaison. La ou les terre(s) rare(s) supplémentaire(s) sont choisie(s) parmi le néodyme, le praséodyme, le gadolinium et le samarium ainsi que leurs combinaisons.

Les compositions de l'invention se caractérisent aussi par leur surface spécifique qui est d'au moins 15 m²/g après calcination à 1150°C pendant 10 heures. Comme on le verra plus loin, des valeurs de surface d'au moins 20 m2/g peuvent être obtenues et les compositions de l'invention peuvent même atteindre, dans ces mêmes conditions de calcination, des surfaces allant jusqu'à environ 25 m²/g.

Cette surface peut être d'au moins 30 m²/g après calcination 4 heures à 1000°C. Plus particulièrement, dans ces mêmes conditions de calcination, cette surface peut être d'au moins 40 m²/g. Il est possible d'obtenir des valeurs, allant jusqu'à environ 65 m²/g.

La surface peut être d'au moins 60 m²/g et plus particulièrement d'au moins 65 m²/g après calcination 4 heures à 900°C.

Enfin, elle peut être d'au moins 15 m²/g et plus particulièrement d'au moins 20 m²/g après calcination 10 heures à 1100°C, voire d'au moins 30 m²/g dans certains cas.

Les compositions de l'invention se caractérisent par ailleurs par la nature de la phase cristallographique qu'elles présentent. Ces compositions sont en effet sous forme d'une phase cubique, de type fluorine, de préférence pure, ceci après calcination dans les conditions données ci-dessus (1150°C sous air). Les compositions de l'invention présentent de ce fait une stabilité phasique élevée. Cette structure de la phase est déterminée par analyse par diffraction des rayons X.

Des modes de réalisation plus particuliers de l'invention vont maintenant être décrits.

Ainsi, les compositions peuvent présenter une proportion massique totale en oxydes d'yttrium, de lanthane et de la terre rare supplémentaire qui est d'au plus 30%.

Selon un autre mode, elles peuvent aussi présenter une proportion en oxyde de zirconium d'au moins 40% et une proportion en oxyde de cérium d'au plus 40%.

Selon encore un autre mode, elles peuvent aussi présenter une proportion en oxyde de zirconium d'au moins 50% et une proportion en oxyde de cérium d'au plus 25%.

Les compositions de l'invention peuvent aussi présenter plus particulièrement les proportions massiques suivantes : oxyde de zirconium au moins 50%, oxyde de cérium : entre 15% et 30% et plus particulièrement entre 15% et 20%, oxyde d'yttrium : entre 10% et 20% et oxyde de lanthane : entre 2% et 5%. Pour ce mode de réalisation avec ces dernières proportions en oxydes, la terre rare supplémentaire peut être encore plus particulièrement le néodyme ou le praséodyme. Dans ce cas particulier, la compositionpeut présenter après calcination 4 heures à 1000°C, une surface spécifique d'au moins 45 m²/g. Enfin, dans le cas où la terre rare supplémentaire est le praséodyme ou le néodyme, les compositions de l'invention peuvent présenter après calcination 10 heures à 1150°C, une surface spécifique d'au moins 20 m²/g.

Selon un autre mode de réalisation plus particulier, les compositions présentent les mêmes proportions que celles données ci-dessus dans le paragraphe précédent, à l'exception de la teneur en oxyde d'yttrium qui est ici comprise entre 15% et 20%. Dans ce dernier cas, les surfaces spécifiques sont d'au moins 50 m²/g après calcination 4 heures à 1000°C et d'au moins 30 m²/g après calcination 10 heures à 1100°C.

Les compositions de l'invention présentant une teneur en oxyde d'yttrium d'au moins 10% et une teneur globale en oxydes d'yttrium, de lanthane et de la terre rare supplémentaire d'au moins 20% peuvent présenter une surface d'au moins 8 m²/g, plus particulièrement d'au moins 10 m²/g après calcination 10 heures à 1200°C.

Le procédé de préparation des compositions de l'invention va maintenant être décrit.

Ce procédé de préparation des compositions est caractérisé en ce qu'il comprend les étapes suivantes :
- (a) on forme un mélange comprenant des composés du zirconium, du cérium, de l'yttrium, du lanthane et de la terre rare supplémentaire;
- (b) on met en présence ledit mélange avec un composé basique ce par quoi on obtient un précipité;
- (c) on chauffe en milieu aqueux ledit précipité;
- (d) on ajoute au précipité obtenu à l'étape précédente un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on calcine le précipité ainsi obtenu.

La première étape (a) du procédé consiste donc à préparer un mélange en milieu liquide des composés des éléments constitutifs de la composition , c'est à dire du zirconium, du cérium, de l'yttrium, du lanthane et de la terre rare supplémentaire.

Le mélange se fait dans un milieu liquide qui est l'eau.

Les composés sont de préférence des composés solubles. Ce peut être notamment des sels de zirconium, de cérium et de terre rare. Ces composés peuvent être choisis parmi les nitrates, les sulfates, les acétates, les chlorures, les nitrates céri-ammoniacaux.

A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que nitrates ou nitrates céri-ammoniacaux par exemple, qui conviennent ici particulièrement bien. De préférence, on utilise du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en œuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient du cérium sous forme III, il est préférable de faire intervenir dans le cours du procédé un agent oxydant, par exemple de l'eau oxygénée. Cet agent oxydant peut être utilisé en étant ajouté au milieu réactionnel lors de l'étape (a) ou lors de l'étape (b), notamment à la fin de celle-ci.

Il est aussi possible d'utiliser un sol comme composé de départ du zirconium ou du cérium. Par sol on désigne tout système constitué de fines particules solides de dimensions colloïdales, c'est à dire des dimensions comprises entre environ 1nm et environ 500nm, à base d'un composé de zirconium ou de cérium ce composé étant généralement un oxyde et/ou un oxyde hydraté de zirconium ou de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium ou le cérium peuvent se trouver soit totalement sous la forme de colloïdes, soit simultanément sous la forme d'ions et sous la forme de colloïdes.

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape (b) du procédé, on met en présence ledit mélange avec un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique peut être plus particulièrement utilisé sous forme d'une solution.

La manière d'effectuer la mise en présence du mélange et du composé basique, c'est à dire l'ordre d'introduction de ceux-ci n'est pas critique. Toutefois, cette mise en présence peut se faire en introduisant le mélange dans le composé basique sous forme d'une solution. Cette variante est préférable pour obtenir les compositions de l'invention sous forme d'une phase cubique pure.

La mise en présence ou la réaction entre le mélange et le composé basique, notamment l'addition du mélange dans le composé basique sous forme d'une solution, peut être effectuée en une seule fois, graduellement ou en continu, et elle est de préférence réalisée sous agitation. Elle est de préférence conduite à température ambiante.

L'étape suivante (c) du procédé est l'étape de chauffage du précipité en milieu aqueux.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C. L'opération de chauffage peut être conduite en introduisant le milieu liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Le milieu soumis au chauffage présente généralement un pH d'au moins 5. De préférence, ce pH est basique, c'est à dire qu'il est supérieur à 7 et, plus particulièrement, d'au moins 8.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante (d) du procédé consiste à ajouter au précipité issu de l'étape précédente un additif qui est choisi parmi les tensioactifs anioniques, les tensioactifs non ioniques, les polyéthylène-glycols et les acides carboxyliques et leurs sels ainsi que les tensioactifs du type éthoxylats d'alcools gras carboxyméthylés.

En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés, les sarcosinates, les esters phosphates, les sulfates comme les sulfates d'alcool les sulfates d'éther alcool et les éthoxylates d'alcanolamide sulfatés, les sulfonates comme les sulfosuccinates, les alkyl benzène ou alkyl naphtalène sulfonates.

Comme tensioactif non ionique on peut mentionner les tensioactifs acétyléniques, les éthoxylates d'alcool, les alcanolamides, les oxydes d'amine, les alcanolamides éthoxylés, les amines éthoxylées à longues chaînes, les copolymères oxyde d'éthylène/oxide de propylène, les dérivés du sorbiatan, l'éthylène glycol, le propylène glycol, le glycérol, les esters polyglyceryle et leurs dérivés éthoxylés, les alkylamines, les alkylimidazolines, les huiles éthoxylées et les éthoxylates d'alkylphénol. On peut citer notamment les produits vendus sous les marques IGEPAL®, DOWANOL®, RHODAMOX® et ALKAMIDE®.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement CH₂-COOH.

Ces produits peuvent répondre à la formule :

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)-CH₂-O-.

L'addition du tensio-actif peut se faire de deux manières. Il peut être ajouté directement dans la suspension de précipité issue de l'étape précédente de chauffage (c). Il peut aussi être ajouté au précipité solide après séparation de celui-ci par tout moyen connu du milieu dans lequel a eu lieu le chauffage.

La quantité de tensio-actif utilisée, exprimée en pourcentage en masse d'additif par rapport à la masse de la composition calculée en oxyde, est généralement comprise entre 5% et 100% plus particulièrement entre 15% et 60%.

Selon une variante de mise en œuvre du procédé, il est possible de soumettre le précipité en suspension à un broyage d'énergie moyenne en soumettant cette suspension à un cisaillement, par exemple en utilisant un broyeur colloïdal ou une turbine d'agitation.

Selon une autre variante avantageuse de l'invention, avant de mettre en œuvre la dernière étape du procédé (étape de calcination), on procède à un lavage du précipité après l'avoir séparé du milieu dans lequel il se trouvait en suspension. Ce lavage peut se faire à l'eau, de préférence avec de l'eau à pH basique, par exemple de l'eau ammoniaquée.

Dans une dernière étape du procédé selon l'invention, le précipité récupéré est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en œuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500 et 1000°C.

Les compositions de l'invention telles que décrites plus haut ou telles qu'obtenues dans le procédé étudié précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme pièges à NOx ou pour favoriser la réduction des NOx même en milieu oxydant.

Dans le cas de ces utilisations en catalyse, les compositions de l'invention sont employées en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

Dans ces exemples, la mesure du taux de réductibilité est faite dans les conditions suivantes.

### Taux de réductibilité

Le taux de réductibilité du cérium est mesuré en effectuant une réduction en température programmée sur un appareil Ohkura Riken TP5000. Cet appareil permet de mesurer la consommation d'hydrogène d'une composition selon l'invention en fonction de la température et d'en déduire le taux de réduction du cérium.

Plus précisément, on utilise l'hydrogène comme gaz réducteur à 10% en volume dans l'argon avec un débit de 30 mL/mn. Le protocole expérimental consiste à peser 200 mg de l'échantillon dans un récipient préalablement taré. L'échantillon est ensuite introduit dans une cellule en quartz contenant dans le fond de la laine de quartz. L'échantillon est enfin recouvert de laine de quartz et positionné dans le four de l'appareil de mesure. Le programme de température est le suivant :
- oxydation : montée en température jusqu'à 500°C avec une rampe de montée à 10°C/mn sous O₂ à 5%vol dans He;
- palier de 30 mn puis descente à 30°C;
- traitement à 30°C sous Ar pendant 20 mn;
- réduction : montée en température jusqu'à 900°C avec une rampe de montée à 20°C/mn sous H₂ à 10 %vol dans Ar;
- calibration ;
- descente en température sous Ar de 900°C à 30°C.

Lors de ce programme, la température de l'échantillon est mesurée à l'aide d'un thermocouple placé dans la cellule de quartz au-dessus de l'échantillon. La consommation d'hydrogène lors de la phase de réduction est déduite grâce à la calibration de la variation de la conductivité thermique du flux gazeux mesurée en sortie de la cellule à l'aide d'un détecteur de conductivité thermique (TCD).

Le taux de réduction du cérium est calculé à partir de la consommation d'hydrogène mesurée entre 30°C et 900°C.

Les exemples concernent des compositions selon l'invention.

### EXEMPLE 1

Cet exemple concerne une composition à 63% de zirconium, 15% de cérium, 2% de lanthane, 15% d'yttrium et 5% de praséodyme, ces proportions étant exprimées en pourcentages massiques des oxydes ZrO₂, CeO₂, La₂O₃, Y₂O₃ et Pr₆O₁₁.

Dans un bécher agité, on introduit 237 ml de nitrate de zirconium (265 g/l en ZrO₂), 59,1 ml de nitrate de cérium (254g/l en CeO₂ 6,6% du cérium total sous forme Ce³⁺, le restant du cérium sous forme Ce⁴⁺ et 0,65 mol/l d'acidité libre), 4,4 ml de nitrate de lanthane (456 g/l en La₂O₃), 39,3 ml de nitrate d'yttrium (382 g/l en Y₂O₃) et 10 ml de nitrate de praséodyme (500 g/l en Pr₆O₁₁). On complète ensuite avec de l'eau distillée de façon à obtenir 1 litre d'une solution de nitrates.

Dans un réacteur agité, on introduit 225 ml d'une solution d'ammoniaque (12 mol/l) et on complète ensuite avec de l'eau distillée de façon à obtenir un volume total de 1 litre.

La solution de nitrates est introduite en une heure dans le réacteur sous agitation constante.

La suspension ainsi obtenue est placée dans un autoclave en acier inoxydable équipé d'un mobile d'agitation. La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis on ajoute sur le précipité filtré de l'eau ammoniaquée à raison d'une fois le volume des eaux-mères de filtration. Le produit obtenu est ensuite porté à 900°C pendant 4 heures en palier.

### EXEMPLES 2 à 10

On procède de la même façon que dans l'exemple 1. Les proportions des constituants des différentes compositions et les quantités de réactifs mis en œuvre sont indiquées respectivement dans les tableaux 1 et 2 ci-après. Pour l'exemple 6, le chauffage est effectué à 150°C pendant 30 minutes. Pour l'exemple 7, la solution de nitrate de gadolinium présente une concentration de 390 g/l en Gd₂O₃. Pour l'exemple 8, la solution de nitrate de samarium présente une concentration de 422 g/l en Sm₂O₃. Pour l'exemple 10, la solution de nitrate de néodyme présente une concentration de 524 g/l en Nd₂O₃. Dans le tableau 1 TR désigne la terre rare supplémentaire.

**Tableau 1**

| Exemple | %Zr | %Ce | %La | %Y | %TR | TR |
|---|---|---|---|---|---|---|
| 1 | 63 | 15 | 2 | 15 | 5 | Pr |
| 2 | 58 | 15 | 2 | 20 | 5 | Pr |
| 3 | 53 | 20 | 2 | 20 | 5 | Pr |
| 4 | 53 | 30 | 2 | 10 | 5 | Pr |
| 5 | 40 | 40 | 2 | 14 | 4 | Pr |
| 6 | 25 | 55 | 3 | 14 | 3 | Pr |
| 7 | 53 | 20 | 2 | 20 | 5 | Gd |
| 8 | 53 | 20 | 2 | 20 | 5 | Sm |
| 9 | 45 | 31 | 4 | 10 | 10 | Gd |
| 10 | 45 | 31 | 6 | 12 | 6 | Nd |

**Tableau 2**

| Exemple | VZr | VCe | VLa | VY | VTR | Vammoniaque |
|---|---|---|---|---|---|---|
| 1 | 237 | 59,1 | 4,4 | 39,3 | 10 | 225 |
| 2 | 218 | 59,1 | 4,4 | 52,4 | 10 | 231 |
| 3 | 200 | 78,7 | 4,4 | 52,4 | 10 | 237 |
| 4 | 200 | 118,1 | 4,4 | 26,2 | 10 | 235 |
| 5 | 151 | 157,5 | 4,4 | 36,6 | 8 | 251 |
| 6 | 94 | 216,5 | 6,6 | 36,6 | 6 | 251 |
| 7 | 200 | 78,7 | 4,4 | 52,4 | 12,8 | 203 |
| 8 | 200 | 78,7 | 4,4 | 52,4 | 11,8 | 236 |
| 9 | 169 | 122 | 8,8 | 26 | 25,6 | 236 |
| 10 | 169 | 122 | 13,2 | 31,4 | 11,5 | 240 |

| | | | | | | |
|---|---|---|---|---|---|---|
| VZr désigne le volume de la solution de nitrate de zirconium utilisée VCe désigne le volume de la solution de nitrate de cérium utilisée VLa désigne le volume de la solution de nitrate de lanthane utilisée VY désigne le volume de la solution de nitrate d'yttrium utilisée VTR désigne le volume de la solution de nitrate de la terre rare supplémentaire utilisée Vammoniaque désigne le volume de la solution d'ammoniaque utilisée Toutes les valeurs sont données en ml. | | | | | | |

Afin de déterminer leur stabilité thermique, les compositions telles qu'obtenues à l'issue du procédé décrit dans l'exemple 1 ont été ensuite soumises à des calcinations sous air à différentes températures. Les surfaces spécifiques mesurées après ces traitements thermiques sont reportées dans le tableau 3 suivant. Les valeurs sont exprimées en m²/g.

**Tableau 3**

| Exemple | 4h/900°C | 4h/1000°C | 10h/1100°C | 10h/1150°C |
|---|---|---|---|---|
| 1 | 72 | 62 | 32 | 18 |
| 2 | 70 | 53 | 30 | 23 |
| 3 | 66 | 47 | 27 | 22 |
| 4 | 71 | 55 | 26 | 16 |
| 5 | 74 | 55 | 32 | 17 |
| 6 | 61 | 43 | 24 | 16 |
| 7 | 72 | 34 | 19 | 15 |
| 8 | 72 | 34 | 17 | 15 |
| 9 | 72 | 55 | 30 | 20 |
| 10 | 73 | 56 | 31 | 20 |

Après un traitement thermique pendant 10 heures à 1150°C sous air, on effectue l'analyse par les rayons X de ces échantillons. Les analyses sont faites sur poudre à l'aide d'un diffractomètre Panalytical équipé d'un détecteur multicanal de type X'Celerator et d'un monochromateur Kβ/Kα. Les données sont collectées en 20 minutes entre 2θ = 10° et 2θ = 95° avec un pas de 0,017 mm.

Les figures jointes sont les diagrammes RX obtenus par ces analyses. Ces diagrammes font systématiquement apparaître une phase unique de symétrie cubique (les pics à 2θ = 44.6° et 2θ = 51.5° sont dus au porte-échantillon).

La figure 1 correspond au diagramme RX du produit selon l'exemple 1. Le paramètre de maille mesuré est de 5,205 Å.

La figure 2 correspond au diagramme RX du produit selon l'exemple 5. Le paramètre de maille mesuré est de 5,269 Å.

La figure 3 correspond au diagramme RX du produit selon l'exemple 6. Le paramètre de maille mesuré est de 5,322 Å.

### EXEMPLE 11

Cet exemple concerne une composition à 53% de zirconium, 20% de cérium, 4% de lanthane, 18% d'yttrium et 5% de néodyme, ces proportions étant exprimées en pourcentages massiques des oxydes ZrO₂, CeO₂, La₂O₃, Y₂O₃ et Nd₂O₃.

Dans un bécher agité, on introduit 200 ml de nitrate de zirconium (265 g/l en ZrO₂), 80 ml de nitrate de cérium IV (254 g/l en CeO₂), 9 ml de nitrate de lanthane (456 g/l en La₂O₃), 48 ml de nitrate d'yttrium (382 g/l en Y₂O₃) et 10 ml de nitrate de néodyme (500 g/l en Nd₂O₃). On complète ensuite avec de l'eau distillée de façon à obtenir 1 litre d'une solution de nitrates.

Dans un réacteur agité, on introduit 225 ml d'une solution d'ammoniaque (12 mol/l) et on complète ensuite avec de l'eau distillée de façon à obtenir un volume total de 1 litre.

La solution de nitrates est introduite en une heure dans le réacteur sous agitation constante.

La suspension ainsi obtenue est placée dans un autoclave en acier inoxydable équipé d'un mobile d'agitation. La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis on ajoute sur le précipité filtré de l'eau ammoniaquée à raison d'une fois le volume des eaux-mères de filtration.

Le précipité obtenu après filtration et lavage est ensuite calciné sous air 4 heures à 900°C.

### EXEMPLE 12

On prépare la même composition que dans l'exemple 11 en procédant de la même manière jusqu'à l'étape de calcination.

On procède ensuite dans un premier temps à une première calcination sous azote à 1000°C pendant 4h. Après retour à l'ambiante, on procède à une seconde calcination sous air à 700°C pendant 4h.

### EXEMPLE 13

On prépare la même composition que dans l'exemple 10 et selon le même mode opératoire jusqu'à la calcination. Ensuite dans un premier temps on effectue une première calcination sous azote à 1000°C pendant 4h. Après retour à l'ambiante, on procède à une seconde calcination sous air à 700°C pendant 4h.

On donne dans les tableaux 4 et 5 qui suivent les valeurs de réductibilité des compositions des exemples 10, 11, 12 et 13 et de surface pour les compositions 11 à 13.

Les valeurs de surface et de réductibilité données ont été mesurées sur des produits obtenus selon le procédé décrit dans les exemples et qui ont subi de nouveau une calcination aux températures et pendant les durées indiquées dans les tableaux.

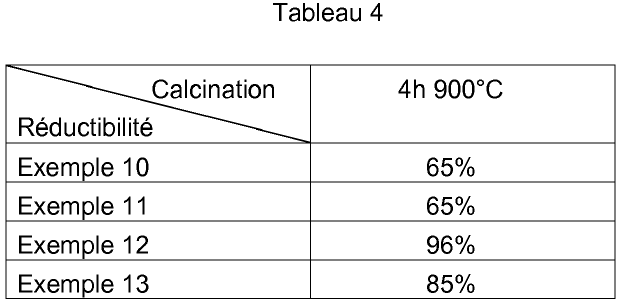

On précise qu'après calcination 10h à 1150°C les compositions des exemples 11 à 13 se présentent sous la forme d'une phase cristalline cubique pure.

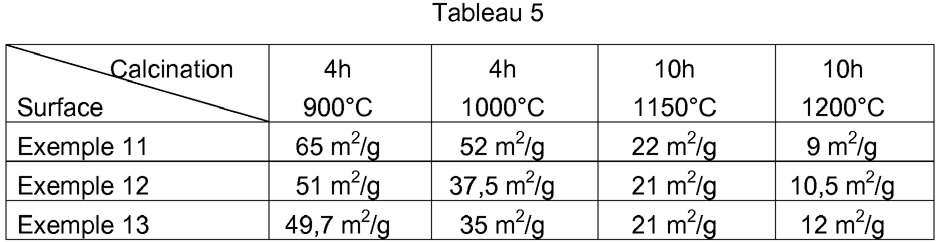

On voit que les compositions selon la variante des exemples 12 et 13 présentent une réductibilité à 900°C nettement améliorée tout en gardant une surface spécifique importante à cette même température et aussi à des températures plus élevées.

## Revendications

1. Composition constituée d'oxydes de zirconium, de cérium, d'yttrium, de lanthane et d'une ou plusieurs terre(s) rare(s) supplémentaire(s) autre(s) que le cérium, le lanthane et l'yttrium, choisie(s) dans le groupe formé par le néodyme, le praséodyme, le gadolinium et le samarium, dans une proportion massique en oxyde de zirconium d'au moins 25%, comprise entre 15% et 60% en oxyde de cérium, entre 10% et 25% en oxyde d'yttrium, entre 2% et 10% en oxyde de lanthane et entre 2% et 15% en oxyde de la ou des terre(s) rare(s) supplémentaire(s), présentant après calcination sous air 10 heures à 1150°C, une surface spécifique d'au moins 15 m²/g ainsi qu'une phase cubique.

2. Composition selon la revendication 1, **caractérisée en ce que** la proportion massique totale en oxydes d'yttrium, de lanthane et de la ou des terre(s) rare(s) supplémentaire(s) est d'au plus 30%.

3. Composition selon l'une des revendications précédentes, **caractérisée en ce que** la proportion massique en oxyde de zirconium est d'au moins 40% et celle en oxyde de cérium d'au plus 40%.

4. Composition selon l'une des revendications précédentes, **caractérisée en ce que** la proportion massique en oxyde de zirconium est d'au moins 50%, celle en oxyde de cérium est comprise entre 15% et 30%, celle en oxyde d'yttrium est comprise entre 10% et 20% et celle en oxyde de lanthane est comprise entre 2% et 5%.

5. Composition selon la revendication 4, **caractérisée en ce que** la proportion massique en oxyde d'yttrium est comprise entre 15% et 20%.

6. Composition selon la revendication 1, **caractérisée en ce que** la teneur en oxyde d'yttrium est d'au moins 10% et la teneur globale en oxydes d'yttrium, de lanthane et de la ou des terre(s) rare(s) supplémentaire(s) est d'au moins 20% et **en ce qu'**elle présente après calcination sous air 10 heures à 1200°C, une surface spécifique d'au moins 8 m²/g, plus particulièrement d'au moins 10 m²/g.

7. Composition selon la revendication 4, **caractérisée en ce que** la terre rare supplémentaire est le praséodyme ou le néodyme et **en ce qu'**elle présente après calcination sous air 10 heures à 1150°C, une surface spécifique d'au moins 20 m²/g.

8. Composition selon la revendication 4, **caractérisée en ce que** la terre rare supplémentaire est le néodyme ou le praséodyme et **en ce qu'**elle présente après calcination sous air 4 heures à 1000°C, une surface spécifique d'au moins 45 m²/g.

9. Composition selon l'une des revendications précédentes, **caractérisée en ce qu'**elle présente après calcination sous air 10 heures à 1150°C une surface spécifique d'au moins 20 m²/g.

10. Composition selon la revendication 5, **caractérisée en ce qu'**elle présente après calcination sous air 10 heures à 1100°C une surface spécifique d'au moins 30 m²/g.

11. Procédé de préparation d'une composition selon l'une des revendications 1 à 10, **caractérisé en ce qu'**il comprend les étapes suivantes :
- (a) on forme un mélange comprenant dans l'eau des composés du zirconium, du cérium, de l'yttrium, du lanthane et de la ou des terre(s) rare(s) supplémentaire(s) choisis parmi les nitrates, les sulfates, les acétates, les chlorures et les nitrates ceri-ammoniacaux ;
- (b) on met en présence ledit mélange avec un composé basique choisi parmi les aminés et l'ammoniaque, ce par quoi on obtient un précipité ;
- (c) on chauffe en milieu aqueux ledit précipité à une température d'au moins 130°C ;
- (d) on ajoute au précipité obtenu à l'étape précédente un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés ;
- (e) on calcine le précipité ainsi obtenu à une température comprise entre 500°C et 1000°C.

12. Procédé selon la revendication 11, **caractérisé en ce qu'**on lave le précipité à l'issue de l'étape (d) et avant la calcination.

13. Système catalytique comprenant un revêtement à propriétés catalytiques et à base d'une composition selon l'une des revendications 1 à 10 sur un substrat du type monolithe métallique ou en céramique.

14. Utilisation d'une composition selon l'une des revendications 1 à 10 dans le traitement des gaz d'échappement des moteurs à combustion interne.

## Patentansprüche

1. Zusammensetzung, die aus Oxiden von Zirconium, Cer, Yttrium, Lanthan und einer oder mehreren zusätzlichen seltenen Erden, die von Cer, Lanthan und Yttrium verschieden sind und aus der Gruppe bestehend aus Neodym, Praseodym, Gadolinium und Samarium ausgewählt sind, in einem Gewichtsanteil an Zirconiumoxid von mindestens 25 %, zwischen 15 % und 60 % Ceroxid, zwischen 10 % und 25 % Yttriumoxid, zwischen 2 % und 10 % Lanthanoxid und zwischen 2 % und 15 % an Oxid der zusätzlichen seltenen Erde bzw. der zusätzlichen seltenen Erden besteht und nach 10 Stunden Calcinieren an der Luft bei 1150 °C eine spezifische Oberfläche von mindestens 15 m²/g sowie eine kubische Phase aufweist.

2. Zusammensetzung nach Anspruch 1, **dadurch gekennzeichnet, dass** der gesamte Gewichtsanteil an Oxiden von Yttrium, Lanthan und der zusätzlichen seltenen Erde bzw. den zusätzlichen seltenen Erden höchstens 30 % beträgt.

3. Zusammensetzung nach einem der vorhergehenden Ansprüche, **dadurch gekennzeichnet, dass** der Gewichtsanteil an Zirconiumoxid mindestens 40 % beträgt und Gewichtsanteil an Ceroxid höchstens 40 % beträgt.

4. Zusammensetzung nach einem der vorhergehenden Ansprüche, **dadurch gekennzeichnet, dass** der Gewichtsanteil an Zirconiumoxid mindestens 50 % beträgt, der Gewichtsanteil an Ceroxid zwischen 15 % und 30 % liegt, der Gewichtsanteil an Yttriumoxid zwischen 10 % und 20 % liegt und der Gewichtsanteil an Lanthanoxid zwischen 2 % und 5 % liegt.

5. Zusammensetzung nach Anspruch 4, **dadurch gekennzeichnet, dass** der Gewichtsanteil an Yttriumoxid zwischen 15 % und 20 % liegt.

6. Zusammensetzung nach Anspruch 1, **dadurch gekennzeichnet, dass** der Gehalt an Yttriumoxid mindestens 10 % beträgt und der Gesamtgehalt an Oxiden von Yttrium, Lanthan und der zusätzlichen seltenen Erde bzw. den zusätzlichen seltenen Erden mindestens 20 % beträgt und sie nach 10 Stunden Calcinieren an der Luft bei 1200 °C eine spezifische Oberfläche von mindestens 8 m²/g und spezieller mindestens 10 m²/g aufweist.

7. Zusammensetzung nach Anspruch 4, **dadurch gekennzeichnet, dass** es sich bei der zusätzlichen seltenen Erde um Praseodym oder Neodym handelt und sie nach 10 Stunden Calcinieren an der Luft bei 1150 °C eine spezifische Oberfläche von mindestens 20 m²/g aufweist.

8. Zusammensetzung nach Anspruch 4, **dadurch gekennzeichnet, dass** es sich bei der zusätzlichen seltenen Erde um Neodym oder Praseodym handelt und sie nach 4 Stunden Calcinieren an der Luft bei 1000 °C eine spezifische Oberfläche von mindestens 45 m²/g aufweist.

9. Zusammensetzung nach einem der vorhergehenden Ansprüche, **dadurch gekennzeichnet, dass** sie nach 10 Stunden Calcinieren an der Luft bei 1150 °C eine spezifische Oberfläche von mindestens 20 m²/g aufweist.

10. Zusammensetzung nach Anspruch 5, **dadurch gekennzeichnet, dass** sie nach 10 Stunden Calcinieren an der Luft bei 1100 °C eine spezifische Oberfläche von mindestens 30 m²/g aufweist.

11. Verfahren zur Herstellung einer Zusammensetzung nach einem der Ansprüche 1 bis 10, **dadurch gekennzeichnet, dass** es folgende Schritte umfasst:
- (a) man bildet eine Mischung, die Verbindungen von Zirconium, Cer, Yttrium, Lanthan und der zusätzlichen seltenen Erde bzw. den zusätzlichen seltenen Erden, die aus Nitraten, Sulfaten, Acetaten, Chloriden und Cerammoniumnitraten ausgewählt werden, in Wasser umfasst;
- (b) man gibt die Mischung mit einer basischen Verbindung, die aus Aminen und wässrigem Ammoniak ausgewählt wird, zusammen, wodurch man einen Niederschlag erhält;
- (c) man erhitzt den Niederschlag in wässrigem Medium auf eine Temperatur von mindestens 130 °C;
- (d) man versetzt den im vorhergehenden Schritt erhaltenen Niederschlag mit einem Additiv, das aus anionischen Tensiden, nichtionischen Tensiden, Polyethylenglykolen, Carbonsäuren und Salzen davon und Tensiden vom Typ carboxymethylierter Fettalkoholethoxylate ausgewählt wird;
- (e) man calciniert den so erhaltenen Niederschlag bei einer Temperatur zwischen 500 °C und 1000 °C.

12. Verfahren nach Anspruch 11, **dadurch gekennzeichnet, dass** man den Niederschlag am Ende von Schritt (d) und vor dem Calcinieren wäscht.

13. Katalytisches System, umfassend eine Beschichtung mit katalytischen Eigenschaften auf der Basis einer Zusammensetzung nach einem der Ansprüche 1 bis 10 auf einem Substrat vom Typ Metall- oder Keramik-Monolith.

14. Verwendung einer Zusammensetzung nach einem der Ansprüche 1 bis 10 bei der Behandlung von Abgasen von Verbrennungsmotoren.

## Claims

1. Composition consisting of oxides of zirconium, of cerium, of yttrium, of lanthanum and of one or more additional rare earth(s) other than cerium, lanthanum and yttrium, chosen from the group formed by neodymium, praseodymium, gadolinilem and samarium, in a weight proportion of zirconium oxide of at least 25%, between 15% and 60% of cerium oxide, between 10% and 25% of yttrium oxide, between 2% and 10% of lanthanum oxide and between 2% and 15% of the oxide of the additional rare earth(s), having, after calcining in air for 10 hours at 1150°C, a specific surface area of at least 15 m²/g and also a cubic phase.

2. Composition according to Claim 1, **characterized in that** the total weight proportion of oxides of yttrium, of lanthanum and of the additional rare earth(s) is at most 30%.

3. Composition according to one of the preceding claims, **characterized in that** the weight proportion of zirconium oxide is at least 40% and that of cerium oxide at most 40%.

4. Composition according to one of the preceding claims, **characterized in that** the weight proportion of zirconium oxide is at least 50%, that of cerium oxide is between 15% and 30%, that of yttrium oxide is between 10% and 20% and that of lanthanum oxide is between 2% and 5%.

5. Composition according to Claim 4, **characterized in that** the weight proportion of yttrium oxide is between 15% and 20%.

6. Composition according to Claim 1, **characterized in that** the yttrium oxide content is at least 10% and the overall content of oxides of yttrium, of lanthanum and of the additional rare earth(s) is at least 20%, and **in that** it has a specific surface area of at least 8 m²/g, more particularly of at least 10 m²/g, after calcining in air for 10 hours at 1200°C.

7. Composition according to Claim 4, **characterized in that** the additional rare earth is praseodymium or neodymium and **in that** it has, after calcining in air for 10 hours at 1150°C, a specific surface area of at least 20 m²/g.

8. Composition according to Claim 4, **characterized in that** the additional rare earth is neodymium or praseodymium and **in that** it has, after calcining in air for 4 hours at 1000°C, a specific surface area of at least 45 m²/g.

9. Composition according to one of the preceding claims, **characterized in that** it has, after calcining in air for 10 hours at 1150°C, a specific surface area of at least 20 m²/g.

10. Composition according to Claim 5, **characterized in that** it has, after calcining in air for 10 hours at 1100°C, a specific surface area of at least 30 m²/g.

11. Method for preparing a composition according to one of Claims 1 to 10, **characterized in that** it comprises the following steps:
- (a) a mixture comprising in water compounds of zirconium, of cerium, of yttrium, of lanthanum and of the additional rare earths chosen from nitrates, sulfates, acetates, chlorides or ceric ammonium nitrates is formed;
- (b) said mixture is brought into contact with a basic compound chosen from amines and aqueous ammonia, whereby a precipitate is obtained;
- (c) said precipitate is heated in an aqueous medium to a temperature of at least 130°C;
- (d) an additive chosen from anionic surfactants, nonionic surfactants, polyethylene glycols, carboxylic acids and salts thereof and surfactants of the carboxymethylated fatty alcohol ethoxylate type is added to the precipitate obtained in the preceding step; and
- (e) the precipitate thus obtained is calcined at a temperature between 500°C and 1000°C.

12. Method according to Claim 11, **characterized in that** the precipitate is washed at the end of step (d) or (d') and before calcining.

13. Catalytic system comprising a coating possessing catalytic properties and based on a composition according to one of Claims 1 to 10 on a substrate of the metal or ceramic monolith type.

14. Use of a composition according to one of Claims 1 to 10 in the treatment of exhaust gases from internal combustion engines.
